Europäisches Patentamt

(19) European Patent Office

Office européen des brevets

(11) Numéro de publication: **0 077 919**
**B1**

(12) **FASCICULE DE BREVET EUROPEEN**

(45) Date de publication du fascicule du brevet: **29.05.85**

(51) Int. Cl.⁴: **C 21 B 5/00,** B 65 G 53/66

(21) Numéro de dépôt: **82108667.5**

(22) Date de dépôt: **20.09.82**

(54) **Procédé d'injection de quantités dosées de matières pulvérulentes par voie pneumatique dans une enceinte se trouvant sous pression variable et application à un four à cuve.**

(30) Priorité: **02.10.81 LU 83671**

(43) Date de publication de la demande:
**04.05.83 Bulletin 83/18**

(45) Mention de la délivrance du brevet:
**29.05.85 Bulletin 85/22**

(84) Etats contractants désignés:
**BE DE FR GB IT NL SE**

(56) Documents cités:
**EP-A-0 021 222**
**EP-A-0 022 549**
**EP-A-0 032 206**

(73) Titulaire: **PAUL WURTH S.A.**
**32 rue d'Alsace**
**L-1122 Luxembourg (LU)**

(72) Inventeur: **Ulveling, Léon**
**rue Dr Jos Peffer**
**L-Howald (LU)**

(74) Mandataire: **Meyers, Ernest et al**
**Office de Brevets Freylinger & Associés 46 rue**
**du Cimetière B.P. 1153**
**L-1011 Luxembourg (LU)**

Courier Press, Leamington Spa, England.

## Description

La présente invention concerne un procédé d'injection de quantités dosées de matières pulvérulentes par voie pneumatique en plusieurs points différents dans une enceinte se trouvant sous pression variable, à travers plusieurs voies de transport pneumatique, alimentées en matières pulvérulentes et en fluide de propulsion sous pression injectés à travers un surpresseur, chacune des conduites étant pourvue d'un doseur à régime variable pour introduire des quantités dosées de matières pulvérulentes dans chacune des conduites.

Quoique n'y étant pas limitée, l'invention concerne plus particulièrement un procédé d'injection de charbon en poudre dans un haut fourneau. Le problème de l'injection de combustibles solides dans un haut fourneau a été résolu par le procédé et l'installation proposés dans la demande de brevet européen publiée No. 0 021 222. L'utilisation de combustibles solides, tels que du charbon ou de la lignite en poudre dans les hauts fourneaux, en remplacement des produits pétroliers, devient de plus en plus intéressante compte tenu du fait que ces derniers deviennent de plus en plus chers et de plus en plus rares.

Toutefois, l'utilisation de la voie pneumatique pour l'injection de combustibles solides dans un haut fourneau nécessite la maîtrise d'un certain nombre de paramètres variables et liés entre eux, tout en respectant certaines conditions de départ. L'une des conditions de départ est l'injection d'une quantité prédéterminée, en poids, de combustibles par unité de temps dans le haut fourneau, par exemple tant de kilos par heure, tout en assurant une répartition régulière de cette quantité sur le nombre de tuyères à travers lesquelles le combustible est injecté.

Un des problèmes essentiels est la maîtrise de la perte de charge dans les voies de transport pneumatique. Pour assurer l'injection pneumatique, il faut en effet, un porteur pneumatique, par exemple de l'air sous pression, qui peut être du vent de mélange tel que proposé par le brevet européen publié No. 0 022 549 qui, non seulement assure le transport pneumatique à une vitesse suffisante pour éviter les dépôts et empêcher les retours de combustion, mais en plus, se trouve à une pression suffisante pour surmonter les pertes de charge dans les conduites de transport et pouvoir injecter le combustible dans le four à l'encontre de la pression qui règne dans celui-ci. Or, si la vitesse peut être déterminée expérimentalement, ou par calcul pour remplir ces deux conditions, il n'en est pas de même pour la pression. D'un côté, la pression dans le four n'est pas constante et subit des fluctuations pouvant atteindre, en valeur absolue, un bar et plus, et il faudra forcément tenir compte de ces fluctuations pour assurer l'injection de combustibles solides dans le four à l'encontre de cette pression et de ces fluctuations. D'un autre côté, les pertes de charge dans les conduites de transport pneumatique sont variables, non seulement en fonction de la pression dans le four et des fluctuations de celle-ci, mais également de la longueur des conduites, ces longueurs étant bien entendu variables suivant la tuyère à laquelle est raccordée une conduite concernée. Si l'on tient compte qu'il est préférable de prévoir une conduite séparée pour chaque tuyère et que le nombre de tuyères d'un haut fourneau est de l'ordre d'un vingtaine, on réalise facilement l'ampleur du problème que pose la maîtrise de la perte de charge dans les conduites et du dosage correct du combustible solide à injecter dans le four.

Le but de la présente invention est de prévoir un procédé d'injection du genre énoncé dans le préambule, qui apporte une solution à ce problème complexe.

Pour atteindre cet objectif, le procédé proposé par la présente invention est caractérisé en ce que, avant l'injection, on détermine, dans chacune des conduites, un point de mesure de pression situé à un endroit tel que la perte de charge $\Delta P$ entre ce point et le point d'injection de la matière pulvérulente dans l'enceinte soit la même pour toutes les conduites et pour la même charge de matière dans le courant pneumatique, en ce que l'on détermine par voie théorique ou expérimentale quelles doivent être les valeurs de ces pertes de charge entre ces deux points pour une quantité déterminée de matières pulvérulentes et pour différentes pressions à l'intérieure de l'enceinte, en ce que l'on mémorise ces valeurs sous forme de données étalon, en ce que pendant l'injection, on surveille en permanence, pour chacune des conduites, les pertes de charge entre les points précédemment déterminés et en ce que l'on asservit, sur base des courbes étalon, le rythme du doseur, de telle manière que, lors de fluctuations de la pression dans l'enceinte, les variations de pertes de charge causées par lesdites fluctuations entre les points déterminés, soient compensées par une augmentation ou une diminution de charge de matières introduites par le doseur et que, finalement, ces pertes de charge entre ces points déterminés soient maintenues à une valeur constante correspondant à celle déterminée par la quantité totale de matière que l'on désire injecter.

Les données étalon peuvent être constituées, pour chaque conduite, par une valeur moyenne ou par plusieurs valeurs de perte de charge.

Autrement dit, la perte de charge qui, auparavant, était à la base des problèmes est, non seulement maîtrisée, mais utilisée, avec profit, pour commander le doseur et régler la pression du fluide pneumatique en fonction des fluctuations de pression dans l'enceinte.

La pression nécessaire du fluide de transport pneumatique est assurée par un surpresseur associé à des régleurs de débit automatiques. Ceux-ci règlent le débit du fluide pneumatique indépendamment de sa pression, c'est-à-dire que le fluide pneumatique traverse ce régleur à la pression nécessaire pour entraîner la matière pulvérulente jusque dans l'enceinte à l'encontre de la pression régnant dans celle-ci.

Autrement dit, selon la présente invention, la pression du fluide pneumatique s'adapte automatiquement à la quantité de matière pulvérulente débitée par le doseur dans la conduite pneumatique pour que la perte de charge entre le point de mesure recherché dans la conduite concernée et le point d'injection dans l'enceinte soit maintenue à une valeur de consigne fournie par les courbes étalon.

L'invention prévoit également, à titre d'application privilégiée, la mise en oeuvre de ce procédé pour l'injection de charbon ou de lignite en poudre dans un haut fourneau.

D'autres particularités et caractéristiques de l'invention seront décrites en détail en référence à la description d'un exemple de mise en oeuvre et d'une application à un haut fourneau, présenté ci-dessous, à titre d'exemple non limitatif, en référence aux figures annexées, dans lesquelles:

La figure 1 montre un faisceau de courbes caractéristiques de l'injection pneumatique d'un combustible solide dans un haut fourneau;

La figure 2 montre schématiquement deux lignes pneumatiques desservant deux tuyères à des endroits opposés du haut fourneau et

La figure 3 montre un schéma synoptique illustrant le procédé proposé par l'invention.

L'invention sera décrite, à titre d'illustration, en référence à son application dans une installation telle que proposée par les deux demandes de brevet européen précitées. Dans cette application, le fluide de propulsion sera de l'air froid, normalement utilisé pour la stabilisation de la température du vent chaud, tandis que la matière pulvérulente est de la poudre de charbon. L'enceinte sous pression sera un haut fourneau. Il est toutefois évident qu l'invention est également applicable pour d'autres fluides de propulsion, pour d'autres matières pulvérulentes et pour d'autres enceintes sous pression.

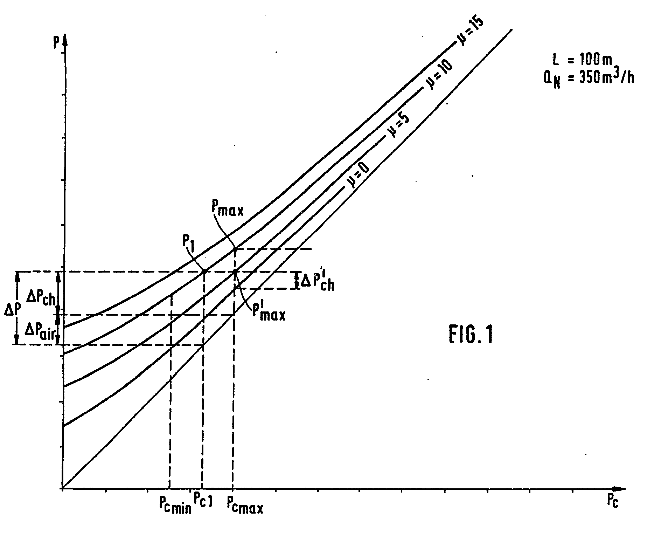

La figure 1 illustre une série de courbes montrant la pression minimale nécessaire en amont des doseurs pour injecter le fluide de propulsion chargé de la poudre de charbon dans le haut fourneau dans lequel règne une contre-pression indiquée par "$P_c$" et portée en abcisse sur le graphique. Ces courbes ont été calculées pour une conduite de transport d'une longueur de cent mètres et pour une quantité d'air de propulsion de trois cent cinquante mètres cube à l'heure.

La droite sous 45° représente les conditions statiques correspondant à l'équilibre, c'est-à-dire pour lesquelles il n'y a pas de circulation dans la voie de transport pneumatique, étant donné que la pression P du fluide de propulsion est égale à la contrepression $P_c$ dans le haut fourneau. Le paramètre des différentes courbes est la densité $\mu$ représentant le nombre de kilos de poussière de charbon par kilo d'air de propulsion à l'heure. La courbe inférieure pour laquelle $\mu$ est égal à zéro, correspond à l'injection d'air pur, tandis que au fur et à mesure que la densité de charbon augmente, les courbes remontent en ordonnée. La courbe correspondant à $\mu$ égale 10 représente une injection de 3.500 kilos de poussières de charbon à l'heure.

La perte de charge dans la voie de transport pneumatique, c'est-à-dire la différence de pression entre le doseur, qui peut être un sas à rotor alvéolaire, et le point d'injection dans le four, correspond à la différence d'ordonnée entre un point déterminé de l'une des courbes et le point correspondant sur la droite à 45° ayant la même abcisse. Sur la figure 1, on a représenté, pour une pression "$P_{c1}$" dans le four et pour une densité du courant pneumatique de $\mu$ égale 10, cette perte de charge par $\Delta P$. Cette perte de charge $\Delta P$ se compose d'une perte de charge représentée par $\Delta P_{air}$ correspondant à la perte de charge de l'air de propulsion et à une perte de charge $\Delta P_{ch}$ correspondant à la perte de charge de la poussière de charbon. Vu que les courbes ne sont pas parallèles, ces différences de pression ou pertes de charge $\Delta P$ varient non seulement d'une courbe à l'autre, mais également en fonction de la valeur absolue et momentanée de la pression $P_c$ à l'intérieur du four. Toutefois, étant donné que ces courbes se rapprochent exponentiellement de la droite à 45° pour les contre-pressions élevées, ces variations sont relativement faibles dans la plage des variations normales de la contre-pression à l'intérieur d'un four, cette plage étant limitée par la pression minimale représentée par $P_{c-min}$ et la pression maximale représentée par $P_{c-max}$ sur la figure 1. Il est à noter que les courbes de la figure 1 représentent les courbes de pression optimales, c'est-à-dire celles avec une pression minimale mais suffisante pour qu'il y ait une vitesse minimale de circulation dans la voie de transport pneumatique, c'est-à-dire pour qu'il n'y ait pas de risque de formation de bouchon et pas de propagation de la combustion dans le sens contraire de la circulation du courant pneumatique. Il est bien entendu qu'une pression P supérieure à celle représentée par le graphique pour chacune des valeurs de $\mu$ remplirait les conditions nécessaires à l'injection, mais un tel mode de fonctionnement n'est pas avantageux du point de vue économique, étant donné qu'il faudrait fire tourner le surpresseur à un régime plus que suffisant, ce qui causerait une perte énergétique.

Par conséquent, pour que l'injection de la poudre de charbon dans un four à cuve ou un haut fourneau se fasse dans des conditions optimales, il faut que cette injection se fasse conformément au graphique de la figure 1, c'est-à-dire pour une charge déterminée de poudre de charbon, c'est-à-dire $\mu$ égale 10, on doit, lors des fluctuations de $P_c$ varier la pression de l'air de propulsion conformément à la courbe caractérisée par le paramètre $\mu$ égale 10. Mathématiquement, la pression du fluide de propulsion peut être exprimée par la formule suivante:

$$P_i = P_c + \Sigma \Delta P_i$$

dans laquelle

"i" représente le numéro de la conduite et peut varier, par exemple, entre 1 et 20 s'il y a vingt tuyères.

"$P_i$" égale la pression avant le doseur dans la conduite pneumatique "i".

"$\Sigma\Delta P_i$" représente la somme de toutes les pertes de charge dans la conduite "i".

Etant donné que la contre-pression $P_c$ est connue par des mesures permanentes, on pourrait connaître la pression P si on connaissait la somme des pertes de charge. Or, c'est justement là que se trouve le problème, étant donné que les pertes de charge $\Delta P$ sont fonction de la contre-pression $P_c$, de la charge ou densité $\mu$ de poudre de charbon. En outre, les pertes de charge $\Delta P$ sont variables d'une conduite à l'autre étant donné que ces conduites ont forcément des longueurs différentes, à cause des positions des tuyères et les pertes de charge sont logiquement plus importantes dans les conduites les plus longues.

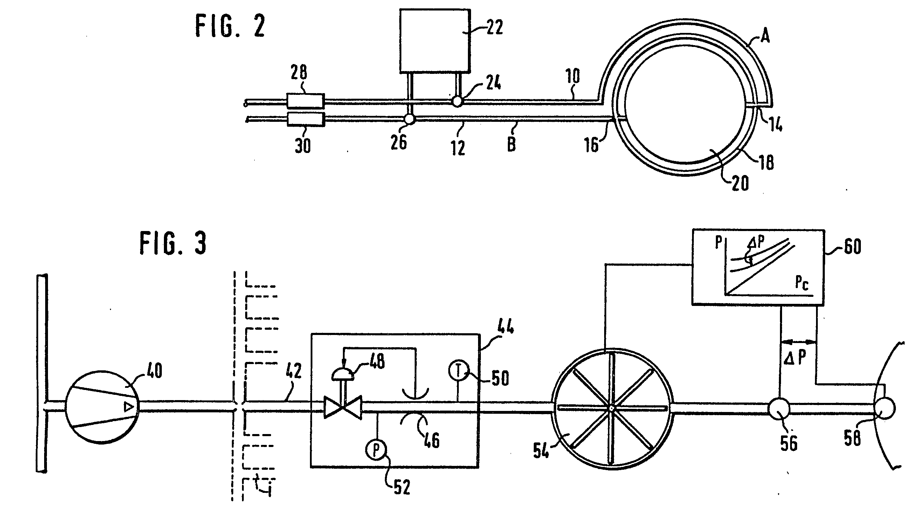

La figure 2 représente schématiquement deux conduites 10 et 12 desservant respectivement les tuyères 14 et 16 qui sont alimentées par une conduite circulaire 18 de vent chaud pour injecter le vent chaud dans le four à curve représenté par 20. La référence 22 représente un réservoir de distribution raccordé à des doseurs 24 et 26 incorporés dans les conduites 10 et 12 et à travers lesquelles la poudre de charbon est admise dans le courant d'aire comprimé pour former le courant pneumatique. Le débit d'air comprimé est réglé par des régulateurs de débit automatiques 28 et 30. Les organes doseurs dont le nombre est égal au nombre de conduites et au nombre de tuyères peuvent être constitués par des sas à rotor alvéolaire, ou, tout simplement par des clapets doseurs connus en soi incorporés dans les conduites d'évacuation du réservoir de distribution 22. Compte tenu de la distribution des tuyères autour du four 20, toutes les conduites sont forcément de longueurs différentes et, dans le cas de la figure 2, la conduite 10 est bien entendu plus longue que la conduite 12, de sorte que les pertes de charge sont plus élevées dans cette conduite 10 que dans la conduite 12.

L'invention se propose de maîtriser les pertes de charge en les maintenant constantes dans chacune des conduites "i". Toutefois, pour pouvoir les maintenir constantes, il faut les surveiller, et pour les surveiller, il faut mesurer ces pertes de charge. En plus, afin d'avoir des mesures significatives de $\Delta P$ et comparables entre les différentes conduites, il faut effectuer ces mesures à des endroits bien déterminés dans la conduite.

Etant donné qu'on mesure les différences de pression, il faut effectuer, pour chacune des conduites, deux mesures en deux points distincts. L'un de ces points sera le point d'injection dans les tuyères. Etant donné que la pression est à cet endroit égale à la contre-pression $P_c$ du haut fourneau qui est connue et égale pour toutes les conduites "i", on n'aura pas besoin d'effectuer cette mesure. Le deuxième point de mesure pour chacune des conduites sera situé, dans chacune des conduites, à un endroit en amont tel que la perte de charge $\Delta P$ entre ce point et le point d'injection du charbon dans le haut fourneau soit le même pour toutes les conduites et pour la même charge de matière dans le courant pneumatique. Pour les conduites 10 et 12, ces deux points de mesure ont été représentés par les points A et B.

Ces points de mesure A et B sont déterminés par voie théorique et expérimentale. On calcule approximativement l'endroit où se situent les points A et B en utilisant, à cet effet, des formules mathématiques connues, et en tenant compte de la forme des conduites. Par exemple, à cause de la courbure, la perte de charge dans la conduite 10 sera plus élevée que celle dans la conduite 12. Après avoir calculé approximativement ces points de mesures de cette manière, on procède par voie expérimentale en déplaçant les points de mesure le long de leur conduite jusqu'à ce que les pertes de charge jusqu'au point d'injection dans le haut fourneau soient égales pour chacune des conduites. Par conséquent, dans l'exemple représenté, la perte de charge entre le point A et la tuyère 14 devra être égale à la perte de charge entre le point B et la tuyère 16 pour une même quantité de charbon pulvérisé.

Etant donné que, dans chacune des conduites, la perte de charge est fonction de la densité $\mu$ de poudre de charbon transportée dans le courant pneumatique, et inversement, l'invention propose de se servir de cette relation pour compenser les variations de pertes de charge entraînées par des fluctuations de la contre-pression dans le haut fourneau par un réglage approprié du rythme du doseur qui tend à augmenter ou à diminuer la quantité de poudre de charbon débitée pour maintenir la perte de charge à une valeur constante.

Cet asservissement peut être effectué à l'aide d'un micro-processeur, dans lequel ont été mémorisées les courbes de la figure 1. Par conséquent, on connaît la valeur de la perte de charge pour une contre-pression déterminée et pour une densité déterminée. Par exemple, on sait que pour une contre-pression de $P_{c1}$ et une densité de $\mu$ égale 10, la perte de charge de la poudre de charbon est égale à $\Delta P_{ch}$ comme représenté sur la figure 1. Par conséquent, en procédant à l'injection avec ces paramètres, la pression de l'air de propulsion doit automatiquement prendre la valeur $P_1$ juste en amont du doseur.

En supposant maintenant que la contre-pression dans le haut fourneau augmente et passe, par exemple, de $P_{c1}$ à $P_{c\text{-}max}$ avec la même pression $P_1$ de l'air comprimé au niveau du doseur, on se retrouverait sur le point représenté par $P'_{max}$ sur les courbes de la figure 1. Or, en passant de $P_1$ à $P'_{max}$ la perte de charge de la poudre de charbon tombe de $\Delta P_{ch}$ à $\Delta P'_{ch}$ comme représenté sur la figure 1, tandis que la densité passe de $\mu$ égale 10 à $\mu$ égale 5.

Si à partir du point $P'_{max}$, on augmente la densité $\mu$, on augmente également la perte de charge $\Delta P'_{ch}$. Par conséquent, si on augmente la densité $\mu$ jusqu'à ce que la perte de charge soit à nouveau égale à $\Delta P_{ch}$, on doit augmenter le débit jusqu'à ce qu'on se retrouve sur la courbe $\mu$ égale 10. La pression de l'air comprimé au niveau du doseur doit s'adapter à cette augmentation et passe par conséquent automatiquement sur le point $P_{max}$. Il est bien entendu qu'en réglant continuellement et automatiquement le rythme du doseur pour que la perte de charge reste constante et égale à $\Delta P_{ch}$ on ne passe pas par le point $P'_{max}$ pour arriver de $P_1$ à $P_{max}$ mais ce passage se fait en suivant directement la courbe correspondant à $\mu$ égale 10.

Si l'on travaille dans le domaine pratiquement linéaire des courbes de la figure 1, ce qui a été supposé dans le raisonnement précédent, il suffit de mémoriser pour chacune des conduites, la valeur de $\Delta P_{ch}$, car comme on le voit sur la figure 1, cette valeur reset pratiquement constante entre $P_{c-min}$ et $P_{c-max}$. La légère variation théorique de $\Delta P_{ch}$ due à la convergence des courbes de la figure 1 se traduit en fait, en réalité, par une densité $\mu$ légèrement supérieure ou inférieure à celle prévue par les courbes. Toutefois, cet écart, pour les contre-pressions élevées, est insignifiant pour la marche du four. Il est toutefois possible de tenir également compte de ce fait, notamment pour les basses contre-pressions où l'on doit opérer dans un domaine vraiment non-linéaire, car il est possible de mémoriser pour chacune des conduites plusieurs valeurs de $\Delta P_{ch}$, le nombre de ces valeurs étant bien entendu fonction de la précision visée.

La figure 3 montre un schéma synoptique illustrant le procédé de fonctionnement. Un surpresseur 40 alimente chacune des conduites "i" en air comprimé. Dans chacune des conduites "i" se trouve une unité de contrôle et de commande analogue à l'unité représentée, en bloc, par la référence 44 dans la conduite 42. Il s'agit en fait d'un régleur de débit automatique, bien connu en soi, et disponible dans le commerce. Cette unité 44 comporte essentiellement un diaphragme de mesure 46 qui mesure le débit effectif de l'air comprimé et qui commande automatiquement une vanne 48 destinée à ne laisser passer que la quantité nécessaire d'air comprimé. Cette unité 44 porte, en outre, un organe de commande de la température 50 et un organe de mesure de la pression 52.

La référence 54 désigne un organe doseur pour débiter la poudre de charbon dans la conduite 42. Grâce au régleur de débit automatique 44, la pression dans la conduite 42 juste en amont du doseur 54 s'adapte automatiquement à la valeur nécessaire pour entraîner la poudre débitée par le doseur 54.

La référence 56 désigne un point de mesure établi conformément aux explications données en référence à la figure 2. La référence 58 indique la mesure de la contre-pression $P_c$ dans le haut fourneau. Les mesures des points 56 et 58 sont transmises vers un micro-processeur 60 dans lequel ont été mémorisées les valeurs de consigne de $\Delta P$ et qui calculent la valeur effective de $\Delta P$ sur base des mesures effectuées en 56 et 58. Le micro-processeur 60 compare la valeur de consigne à la valeur réelle de $\Delta P$ et commande le doseur 54 pour que la perte de charge $\Delta P$ reste constamment égale à la valeur de consigne mémorisée.

**Revendications**

1. Procédé d'injection de quantités dosées de matières pulvérulentes par voie pneumatique en plusieurs points différents dans une enceinte se trouvant sous pression variable à travers plusieurs voies de transport pneumatique, alimentées en matière pulvérulente et en fluide de propulsion sous pression injecté à travers un surpresseur, chacune des conduites étant pourvue d'un doseur à régime variable pour introduire des quantités dosées de matière pulvérulente dans chacune des conduites, caractérisé en ce que, avant l'injection, on détermine, dans chacune des conduites, un point de mesure de pression situé à un endroit tel que la perte de charge $\Delta P$ entre ce point et le point d'injection de la matière pulvérulente dans l'enceinte soit la même pour toutes les conduites et pour la même charge de matière dans le courant pneumatique, en ce que l'on détermine par voie théorique ou expérimentale quelles doivent être les valeurs de ces pertes de charge entre ces deux points pour une quantité déterminée de matière pulvérulente, et pour différentes pressions à l'intérieur de l'enceinte, en ce que l'on mémorise ces valeurs sous forme de données étalon, en ce que, pendant l'injection, on surveille en permanence, pour chacune des conduites, les pertes de charge entre les points précédemment déterminés et en ce que l'on asservit le rythme du doseur de telle manière que, lors de fluctuations de la pression dans l'enceinte, les variations de pertes de charges causées par lesdites fluctuations entre les points prédéterminés soient compensées par une augmentation ou une diminution de charge de matière introduite par le doseur et que finalement, ces pertes de charge entre ces points déterminés soient maintenues à une valeur constante correspondant à celle déterminée par la quantité totale de matière qu'on désire injecter.

2. Procédé selon la revendication 1, caractérisé en ce que les données étalon mémorisées sont constituées par une valeur moyenne de perte de charge pour chaque conduite.

3. Procédé selon la revendication 1, caractérisé par plusieurs valeurs de perte de charge pour chaque conduite.

4. Procédé selon l'une quelconque des revendications 1 à 3, caractérisé en ce que la mémorisation des données et l'asservissement du doseur sont réalisés par un micro-processeur.

5. Application du procédé selon les revendications 1 à 4 à l'injection d'un combustible solide dans un haut fourneau.

**Patentansprüche**

1. Verfahren zum pneumatischen Einbringen dosierter Mengen pulverförmiger Stoffe, an mehreren, verschiedenen Punkten, in einen unter veränderlichem Druck stehenden Behälter durch mehrere pneumatische Transportleitungen, welche mit einem pulverförmigen Stoff und mit einem, von einem Kompressor erzeugten, unter Druck stehenden Förderfluid versorgt werden, wobei jede Leitung mit einem Drehzahl variabelen Dosierer zum Einbringen des pulverförmigen Stoffes in die Leitung versehen ist, dadurch gekennzeichnet, dass man, vor dem Einbringen, in jeder Leitung einen Druckmesspunkt ermittelt, welcher an einer solchen Stelle gelegen ist, dass der Druckabfall $\Delta p$ zwischen diesem Punkt und dem Einblaspunkt des pulverförmigen Stoffes in den Behälter für alle Leitungen bei gleicher Fördergutbefrachtung des Pneumatikstroms gleich gross ist, dass man auf theoretischem oder experimentellem Wege die Werte dieser Druckabfälle zwischen diesen beiden Punkten für eine gegebene Menge pulverförmigen Stoffes und für unterschiedliche Drücke im Behälterinnern ermittelt, dass diese Werte in Form von Vergleichswerten gespeichert werden, dass man während dem Einblasen in jeder Leitung dauernd die Druckabfälle zwischen den vorhergehend ermittelten Punkten überwacht, und dass man die Frequenz des Dosierers so steuert, dass bei Druckfluktuationen im Behälter die von diesen Fluktuationen hervorgerufenen Veränderungen der Druckabfälle zwischen den vorbestimmten Punkten durch eine Erhöhung oder Verminderung der vom Dosierer zugeführten Stoffmenge kompensiert wird, und dass schliesslich diese Druckabfälle zwischen diesen bestimmten Punkten auf einem konstanten Wert gehalten werden, entsprechend demjenigen, welcher durch die gesamte Stoffmenge gegeben ist, die man einzublasen wünscht.

2. Verfahren nach Anspruch 1, dadurch gekennzeichnet, dass die gespeicherten Vergleichswerte aus einem Mittelwert des Druckabfalls für jede Leitung bestehen.

3. Verfahren nach Anspruch 1, gekennzeichnet durch mehrere Druckabfallwerte für jede Leitung.

4. Verfahren nach einem der Ansprüche 1 bis 3, dadurch gekennzeichnet, dass die Speicherung der Werte und die Steuerung des Dosierers mit Hilfe eines Mikroprozessors durchgeführt werden.

5. Anwendung des Verfahrens nach den Ansprüchen 1 bis 4 auf das Einbringen eines festen Brennstoffs in einen Hochofen.

**Claims**

1. Process for the injection of metered amounts of pulverulent materials by pneumatic means at a plurality of different points into a vessel which is under variable pressure, through a plurality of pneumatic conveyance paths supplied with pulverulent materials and with pressurised propellant fluid, the said materials and the said fluid being injected through a booster, while each of the pipes is provided with a variable delivery metering means for introducing metered amounts of pulverulent materials into each of the pipes, characterised in that before the injection there is determined in each of the pipes a pressure measurement point situated in a position such that the loss of pressure $\Delta P$ between that point and the point of injection of the pulverulent material into the vessel will be the same for all the pipes and for the same charge of material in the pneumatic current, in that it is determined by theoretical or experimental methods what must be the values of these losses of pressure between these two points for a determined amount of pulverulent material and for different pressures inside the vessel, in that these values are memorised in the form of calibration data, in that during the injection the losses of pressure between the previously determined points are continuous monitored for each of the pipes, and in that the rhythm of the metering means is controlled in such a manner that when fluctuations of pressure occur in the vessel the variations of losses of pressure caused by these fluctuations between the predetermined points are compensated by an increase or decrease of the charge of material introduced by the metering means and that finally these losses of pressure between these determined points are maintained at a constant value corresponding to that determined by the total amount of material which it is desired to inject.

2. Process according to Claim 1, characterised in that the calibration data memorised are composed of a mean value of loss of pressure for each pipe.

3. Process according to Claim 1, characterised by a plurality of loss of pressure values for each pipe.

4. Process according to any one of Claims 1 to 3, characterised in that the memorising of the data and the control of the metering means are effected by a microprocessor.

5. Application of the process according to Claims 1 to 4 to the injection of a solid fuel into a blast furnace.

FIG. 1

$L = 100\,m$
$Q_N = 350\,m^3/h$

FIG. 2

FIG. 3